(19) Europäisches Patentamt
European Patent Office
Office européen des brevets

(11) EP 0 485 330 B1

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int. Cl.[6]: **A01N 43/84**, A01N 43/653
// (A01N43/84, 43:653, 43:40, 25:14, 25:12, 25:02)

(21) Anmeldenummer: **91810820.0**

(22) Anmeldetag: **23.10.1991**

(54) **Fungizide Mittel**
Fungicidal agents
Agents fongicides

(84) Benannte Vertragsstaaten:
**AT BE CH DE DK ES FR GB GR IT LI LU NL SE**

(30) Priorität: **02.11.1990 CH 3491/90**

(43) Veröffentlichungstag der Anmeldung:
**13.05.1992 Patentblatt 1992/20**

(60) Teilanmeldung: **96103935.1**

(73) Patentinhaber:
- **CIBA-GEIGY AG**
  **4002 Basel (CH)**
- **ROHM AND HAAS COMPANY**
  **Philadelphia Pennsylvania 19105 (US)**

(72) Erfinder:
- **Küng, Ruth**
  **CH-8157 Dielsdorf (CH)**
- **Driant, Dominique Guy Georges**
  **F-75014 Paris (FR)**

(74) Vertreter: **Roth, Bernhard M. et al**
**Patentabteilung CIBA-Geigy AG,**
**Postfach**
**4002 Basel (CH)**

(56) Entgegenhaltungen:
**EP-A- 0 237 483** **EP-A- 0 251 775**
- **RESEARCH DISCLOSURE, Nr. 307, November 1989, Seite 781, Zusammenfassung Nr. 30713, New York, US; "Fungizide Kombinationspräparate"**
- **RESEARCH DISCLOSURE, Nr. 264, April 1986, Seite 172, Zusammenfassung Nr. 26402, New York, US; "Fungizide Kombinationspräparate"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 485 330 B1

Printed by Rank Xerox (UK) Business Services
2.13.8/3.4

## Beschreibung

Gegenstand der vorliegenden Erfindung sind neue Wirkstoffkombinationen zur Bekämpfung von Pflanzenkrankheiten und Verfahren zur Anwendung solcher Gemische zur Blatt-, Boden- und Beizapplikation.

Die erfindungsgemässen Kombinationen sind gekennzeichnet durch einen Gehalt an

a) 4-(4-Chlorphenyl)-2-phenyl-2-[(1H-1,2,4-triazol-1-yl)methyl]butannitril der Formel I

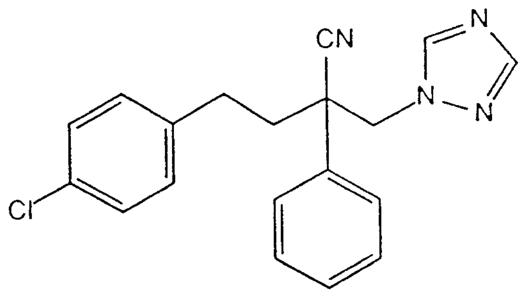

I

bzw. dessen Säureadditionssalzen und Metallkomplexen, und

b) cis-4-[3-(4-tert.Butylphenyl)-2-methylpropyl]-2,6-dimethylmorpholin der Formel II

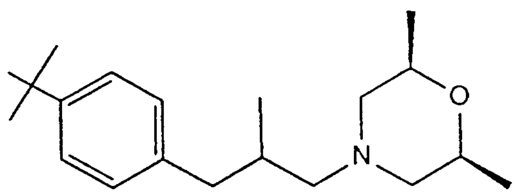

II

bzw. dessen Säureadditionssalzen.

Die Komponente a) ist unter der Code-Bezeichnung RH-7592 bekannt geworden. Ihre Synthese und fungiziden Eigenschaften sind in der EP 0 251 775 beschrieben.

Die Komponente b) ist unter dem Namen Fenpropimorph bekanntgeworden. Ihre Synthesen und fungiziden Eigenschaften sind in der DE-OS 2 752 135 beschrieben.

Es wurde überraschenderweise gefunden, dass die fungizide Wirkung der erfindungsgemässen Wirkstoffkombination wesentlich höher ist als die Summe der Wirkungen der einzelnen Wirkstoffe. Es liegt also eine nicht vorhersehbare synergistisch gesteigerte Wirkung vor und nicht nur eine Wirkungsergänzung, wie sie durch die Kombination zweier Wirkstoffe hätte erwartet werden können. Die erfindungsgemässen Wirkstoffkombinationen stellen somit eine Bereicherung der Technik dar.

Wenn die Wirkstoffe in den erfindungsgemässen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen je nach Anwendung in einem relativ grossen Bereich variiert werden. Im allgemeinen entfallen auf einen Gewichtsteil an Wirkstoff der Formel (I) 0,2-20 Gewichtsteile, vorzugsweise 0,5-10 Gewichtsteile an Wirkstoff der Formel (II). Dies entspricht einem Gewichtsverhältnis der Komponente a) zur Komponente b) von 5:1 bis 1:20. Besonders bevorzugt sind Kombinationen in denen auf einen Gewichtsteil der Formel (I) 1 bis 8 Gewichtsteile an Wirkstoff der Formel (II) entfallen, besonders a):b) = 2:1 bis 1:10 und ganz besonders 1:1 bis 1:4. Als Beispiele seien auch für die Praxis besonders geeignete Mischungsverhältnisse von a):b) = 2:3; 2:5; 1:2 und 1:3 genannt. Fur Säureadditionssalze bzw. Metallkomplexe der Wirkstoffe kommen die entsprechenden Mengenverhältnisse in Frage.

Unter den Säuren, die zur Herstellung von Salzen der Formel I oder II verwendet werden können, sind zu nennen: Halogenwasserstoffsäuren wie Bromwasserstoffsäure und Chlorwasserstoffsäure, ferner Phosphorsäure, Salpetersäure und Schwefelsäure, ferner mono-, bi- und trifunktionelle Carbonsäuren und Hydroxycarbonsäuren wie Ameisensäure, Bernsteinsäure, Essigsäure, Glycolsäure, Fumarsäure, Milchsäure, Oxalsäure, Propionsäure, Sorbinsäure,

Trichloressigsäure, Trifluoressigsäure, Zitronensäure, ferner Sulfonsäuren wie Benzolsulfonsäure, 1,5-Naphthalindisulfonsäure und p-Toluolsulfonsäure sowie (Thio)Saccharin.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Aluminium, Zinn oder Blei sowie der ersten bis achten Nebengruppe wie Chrom, Mangan. Eisen, Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen.

Die erfindungsgemässen Wirkstoffmischungen und deren Säureadditionssalze besitzen pflanzenfungizide Wirkung und können dementsprechend zur Bekämpfung von Pilzen in der Landwirtschaft und im Gartenbau Verwendung finden. Sie eignen sich insbesondere zur Hemmung des Wachstums oder zur Vernichtung von phytopathogenen Pilzen auf Pflanzenteilen, z.B. Blättern, Stengeln, Wurzeln, Knollen , Früchten oder Blüten, und auf Saatgut sowie von im Erdboden auftretenden Schadpilzen.

Die erfindungsgemässen Wirkstoffmischungen eignen sich besonders zur Bekämpfung von Ascomyceten (Erysiphe graminis, Uncinula necator, Venturia, Sphaerotheca pannosa, Erysiphe betae) und Basidiomyceten, zu denen die Rostkrankheiten zählen, wie beispielsweise solche der Gattungen Puccinia, Uromyces und Hemileia (insbesondere Puccinia recondita, Puccinia striiformis, Puccinia graminis, Puccinia coronata, Uromyces fabae, Uromyces appendiculatus, Hemileia vastatrix). Ferner wirken die erfindungsgemässen Wirkstoftkombinationen gegen Fungi imperfecti der Gattungen Helminthosporium (z.B. Helminthosporium oryzae, Helminthosporium teres, Helminthosporium sativum, Helminthosporium tritici-repentis), Alternaria (z.B. Altemaria brassicola, Alternaria brassicae), Septoria (z.B. Septoria avenae), Cercospora (z.B. Cercospora beticola), Ceratocystis (z.B. Ceratocystis ulmi), Pyricularia (z.B. Pyricularia oryzae und Mycosphaerella fijiensis).

Die erfindungsgemässen Wirkstoffkombinationen eignen sich insbesondere auch zur Bekämpfung von Pilzstämmen, die eine gewisse Resistenz gegen Wirkstoffe aus der Triazolklasse entwickelt haben.

Im Freiland werden bevorzugt Dosierungen von 75 bis 1000 g Wirkstoffmischung pro Hektar und Behandlung zur Anwendung gebracht. Zur Bekämpfung von Pilzen im Samenbeizverfahren werden mit Vorteil Dosierungen von 0,01 g bis 1,0 g Wirkstoffmischung pro kg Samen verwendet. Sinngemäss gelten diese Angaben für Pflanzenvermehrungsgut allgemein, also auch für kg-Mengen an Stecklingen, Knollen, Wurzelwerk etc.

Die erfindungsgemässen Fungizidkombinationen zeichnen sich durch systemische, kurative und präventive Wirkung aus.

Die erfindungsgemässen Wirkstoffgemische können zu verschiedenartigen Mitteln, z.B. Lösungen, Suspensionen, Emulsionen, emulgierbaren Konzentraten und pulverförmigen Präparaten, formuliert werden. Solche fungiziden Mittel bilden einen Gegenstand der vorliegenden Enfindung. Die erfindungsgemässen fungiziden Mittel sind dadurch gekennzeichnet, dass sie eine wirksame Menge von RH-7592 und Fenpropimorph bzw. Säureadditionssalze oder Metallkomplexe dieser Wirkstoffe sowie Formulierungshilfsstoffe enthalten. Die Mittel enthalten zweckmässigerweise zumindest einen der folgenden Formulierungshilfsstoffe: Feste Trägerstoffe; Lösungs- bzw. Dispersionsmittel; Tenside (Netzmittel und Emulgatoren); Dispergiermittel (ohne Tensidwirkung); und andersartige Zusatzstoffe, wie beispielsweise Stabilisatoren.

Als feste Trägerstoffe kommen im wesentlichen in Frage: natürliche Mineralstoffe, wie Kaolin, Tonerden, Kieselgur, Talkum, Bentonit, Kreide, z.B. Schlämmkreide, Magnesiumcarbonat, Kalkstein, Quarz, Dolomit, Attapulgit, Montmorillonit und Diatomeenerde; synthetische Mineralstoffe, wie hochdisperse Kieselsäure, Aluminiumoxid und Silikate; organische Stoffe, wie Cellulose, Stärke, Harnstoff und Kunstharze; und Düngemittel, wie Phosphate und Nitrate, wobei solche Trägerstoffe z.B. als Granulate oder Pulver vorliegen können.

Als Lösungs- bzw. Dispersionsmittel kommen im wesentlichen in Frage: Aromaten, wie Toluol, Xylole, höher alkylierte Benzole und Alkylnaphthaline; chlorierte Aromaten und chlorierte aliphatische Kohlenwasserstoffe, wie Chlorbenzole, Chloräthylene und Methylenchlorid; (cyclo)aliphatische Kohlenwasserstoffe, wie Cyclohexan und Paraffine, z.B. Erdölfraktionen; Alkohole, wie Butanol und Glykol, sowie deren Aether und Ester; Ketone, wie Aceton, Methyläthylketon, Methylisobutylketon, Isophoron und Cyclohexanon; und stark polare Lösungs- bzw. Dispersionsmittel, wie Dimethylformamid, N-Methylpyrrolidon und Dimethylsulfoxid, wobei solche Lösungs- bzw. Dispersionsmittel vorzugsweise Flammpunkte von mindestens 30°C und Siedepunkte von mindestens 50°C aufweisen, und Wasser. Unter den Lösungs- bzw. Dispersionsmitteln kommen auch sogenannte verflüssigte gasförmige Streckmittel oder Trägerstoffe in Frage. Das sind solche Produkte, welche bei Raumtemperatur und unter Normaldruck gasförmig sind. Im Falle der Benutzung von Wasser als Lösungsmittel können z.B. auch organische Lösungsmittel als Hilfslösungsmittel verwendet werden.

Die Tenside (Netzmittel und Emulgatoren) können nicht-ionische Verbindungen sein, wie Kondensationsprodukte von Fettsäuren, Fettalkoholen oder fettsubstituierten Phenolen mit Aethylenoxid; Fettsäureester und -äther von Zuckern oder mehrwertigen Alkoholen; die Produkte, die aus Zuckern oder mehrwertigen Alkoholen durch Kondensation mit Aethylenoxid erhalten werden; Blockpolymere von Aethylenoxid und Propylenoxid; oder Alkyldimethylaminoxide.

Die Tenside können auch anionische Verbindungen darstellen, wie Seifen; Fettsulfatester, z.B. Dodecylnatriumsulfat, Octadecylnatriumsulfat und Cetylnatriumsulfat; Alkylsulfonate, Arylsulfonate und fettaromatische Sulfonate, wie Alkylbenzolsulfonate, z.B. Calcium-dodecylbenzolsulfonat, und Butylnaphthalinsulfonate; und komplexere Fettsulfonate, z.B. die Amidkondensationsprodukte von Oelsäure und N-Methyltaurin und das Natriumsulfonat von Dioctylsuccinat.

Die Tenside können schliesslich kationische Verbindungen sein, wie Alkyldimethylbenzylammoniumchloride, Dialkyldimethylammoniumchloride, Alkyltrimethylammoniumchloride und äthoxylierte quaternäre Ammoniumchloride.

Als Dispergiermittel (ohne Tensidwirkung) kommen im wesentlichen in Frage: Natrium- und Ammoniumsalze von Ligninsulfonsäure, Natriumsalze von Maleinsäureanhydrid-Diisobutylen-Copolymeren, Natrium- und Ammoniumsalze von sulfonierten Polykondensationsprodukten aus Naphthalin und Formaldehyd, Natriumsalze von polymeren Carbonsäuren und Sulfitablaugen.

Als Dispergiermittel, die sich insbesondere als Verdickungs- bzw. Antiabsetzmittel eigene, können z.B. Methylcellulose, Carboxymethylcellulose, Hydroxyäthylcellulose, Polyvinylalkohol, Alginate, Caseinate und Blutalbumin eingesetzt werden.

Beispiele von geeigneten Stabilisatoren sind säurebindende Mittel, z.B. Epichlorhydrin, Phenylglycidäther und Soyaepoxide; Antioxidantien, z.B. Gallussäureester und Butylhydroxytoluol; UV-Absorber, z.B. substituierte Benzophenone, Diphenylacrylnitrilsäureester und Zimtsäureester; und Deaktivatoren, z.B. Salze der Aethylendiamintetraessigsäure und Polyglykole.

Die erfindungsgemässen fungiziden Mittel können neben den erfindungsgemässen Kombinationen auch andere Wirkstoffe enthalten, z.B. anderweitige fungizide Mittel [Wirkstoffkomponente c) oder d)], insektizide und akarizide Mittel, Bakterizide, Pflanzenwachstumsregulatoren und Düngemittel. Solche Kombinationsmittel eignen sich zur Verbreiterung des Wirkungsspektrums oder anderweitigen, günstigen Beeinflussung des Pflanzenwachstums.

Im allgemeinen enthalten die erfindungsgemässen fungiziden Mittel, je nach deren Art, zwischen 0,0001 und 95 Gewichtsprozent an erfindungsgemässer Wirkstoffkombination. In Konzentraten ist die Wirkstoftkonzentration normalerweise im höheren Bereich des obigen Konzentrationsintervalls. Diese Formen können dann mit gleichen oder verschiedenen Formulierungshilfsstoffen bis zu Wirkstoffkonzentrationen verdünnt werden, die sich für den praktischen Gebrauch eignen, und solche Konzentrationen liegen normalerweise im niedrigeren Bereich des obigen Konzentrationsintervalls. Emulgierbare Konzentrate enthalten im allgemeinen 5 bis 95 Gewichtsprozent, vorzugsweise 25 bis 85 Gewichtsprozent, der erfindungsgemässen Wirkstoffkombination. Als Anwendungsformen kommen u.a. gebrauchsfertige Lösungen, Emulsionen und Suspensionen, die sich beispielsweise als Spritzbrühen eignen, in Frage. In solchen Spritzbrühen können z.B. Konzentrationen zwischen 0,0001 und 20 Gewichtsprozent vorliegen. Im Ultra-Low-Volume-Verfahren können Spritzbrühen formuliert werden, in denen die Wirkstoffkonzentration vorzugsweise von 0,5 bis 20 Gewichtsprozent beträgt, während die im Low-Volume-Verfahren und im High-Volume-Verfahren formulierten Spritzbrühen vorzugsweise eine Wirkstoffkonzentration von 0,02 bis 1,0 bzw. 0,002 bis 0,1 Gewichtsprozent aufweisen.

Die erfindungsgemässen fungiziden Mittel können dadurch hergestellt werden, dass man eine erfindungsgemässe Wirkstoff-Kombination mit Formulierungshilfsstoffen vermischt.

Die Herstellung der Mittel kann in bekannter Weise durchgeführt werden, z.B. durch inniges Vermischen der Wirkstoffe mit festen Trägerstoffen, durch Auflösen oder Suspendieren in geeigneten Lösungs- bzw. Dispersionsmitteln, eventuell unter Verwendung von Tensiden als Netzmitteln oder Emulgatoren oder von Dispergiermitteln, durch Verdünnen bereits vorbereiteter emulgierbarer Konzentrate mit Lösungs- bzw. Dispersionsmitteln, usw.

Im Falle von pulverförmigen Mitteln können die Wirkstoffe mit einem festen Trägerstoff vermischt werden, z.B. durch Zusammenmahlen; oder man kann den festen Trägerstoff mit einer Lösung oder Suspension der Wirkstoffe imprägnieren und dann das Lösungs- bzw. Dispersionsmittel durch Aodunsten, Erhitzen oder durch Absaugen unter vermindertem Druck entfernen. Durch Zusatz von Tensiden bzw. Dispergiermitteln kann man solche pulverförmige Mittel mit Wasser leicht benetzbar machen, so dass sie in wässrige Suspensionen, die sich z.B. als Spritzmittel eignen, übergeführt werden können.

Die erfindungsgemässen Wirkstoffmischungen können auch mit einem Tensid und einem festen Trägerstoff zur Bildung eines netzbaren Pulvers vermischt werden, welches in Wasser dispergierbar ist, oder sie können mit einem festen vorgranulierten Trägerstoff zur Bildung eines granulatförmigen Produktes vermischt werden.

Wenn gewünscht, können die erfindungsgemässen Wirkstoffmischungen in einem mit Wasser nicht mischbaren Lösungsmittel, wie beispielsweise einem alicyclischen Keton, gelöst werden, das zweckmässigerweise gelösten Emulgator enthält, so dass die Lösung bei Zugabe zu Wasser selbstemulgierend wirkt. Andernfalls können die Wirkstoffkombinationen mit einem Emulgator vermischt und das Gemisch dann mit Wasser auf die gewünschte Konzentration verdünnt werden. Zudem können die Wirkstoffkombinationen in einem Lösungsmittel gelöst und danach mit einem Emulgator gemischt werden. Ein solches Gemisch kann ebenfalls mit Wasser auf die gewünschte Konzentration verdünnt werden. Auf diese Weise erhält man emulgierbare Konzentrate bzw. gebrauchsfertige Emulsionen.

Die Verwendung der erfindungsgemässen Mittel kann nach den im Pflanzenschutz bzw. in der Landwirtschaft üblichen Applikationsmethoden erfolgen. Das erfindungsgemässe Verfahren zur Bekämpfung von Schadpilzen ist dadurch gekennzeichnet, dass man den zu schützenden Ort des Pflanzenwachstums oder das zu schützende Pflanzengut, z.B.

Pflanzen, Pflanzenteile bzw. Samen, mit einer wirksamen Menge einer erfindungsgemässen Wirkstoffkombination bzw. einem erfindungsgemässen Mittel behandelt.

Formulierungsbeispiele

Beispiel 1: Emulgierbares Konzentrat (EC)

| | |
|---|---|
| Fenpropimorph | 375 g/L |
| RH-7592 | 50 g/L |
| N-Methylpyrrolidon (Hilfslösungsmittel) | 100 g/L |
| Nonylphenol-polyethoxylat (nichtion.Emulgator) | 50 g/L |
| Ca-Dodecylbenzolsulfonat (anionischer Emulgator) | 25 g/L |
| Alkylbenzolgemisch (Lösungsmittel) | ad 1000 ml |

Ein derartiges Konzentrat lässt sich mit Wasser zu Anwendungsbrühen für die Blattbehandlung, die Bodenbehandlung oder die Behandlung von Pflanzenteilen verdünnen.

Die resultierenden Lösungen gemäss Beispiel 1 lassen sich in Wasser emulgieren und ergeben so eine gebrauchsfertige Spritzbrühe in einer gewünschten Verdünnung. Solche Lösungen werden zum Schutz von Pflanzen oder Pflanzenteilen (Saatgut, Stecklinge, Knollen etc.) vor Pilzbefall verwendet.

Beispiel 2: Spritzpulver (WP)

| | |
|---|---|
| Fenpropimorph | 25 %w/w |
| RH-7592 | 25 %w/w |
| Kieselsäure hydratisiert (Silica-Trägerstoff) | 25 %w/w |
| Nonylphenol-polyethoxylat (Netzmittel) | 4 %w/w |
| Na-Polycarboxylat (Dispergiermittel) | 4 %w/w |
| Calciumcarbonat (Inertstoff, Träger) | 17 %w/w |

Zur Herstellung dieses Spritzpulvers werden in einem ersten Arbeitsprozess Fenpropimorph und Nonylphenol-polyethoxylat gemischt und in einem Pulvermischer auf die vorgelegte Kieselsäure aufgesprüht.

Anschliessend werden die weiteren Komponenten zugemischt und z.B. mit einer Stiftenmühle fein gemahlen.

Das resultierende Spritzpulver ergibt beim Einrühren in Wasser eine feine Suspension in gewünschter Verdünnung, die sich als gebrauchsfertige Spritzbrühe eignet, z.B. zum Beizen von Pflanzenvermehrungsgut wie Pflanzenknollen, Wurzelwerk und Blattwerk von Setzlingen oder von Pflanzensamen.

Beispiel 3: Stäubemittel

| | |
|---|---|
| Fenpropimorph | 6 %w/w |
| RH-7592 | 2 %w/w |
| Kaolin | 87 %w/w |
| Hochdisperse Kieselsäure | 5 %w/w |

Man erhält anwendungsfertige Stäubemittel, indem der Wirkstoff mit dem Träger vermischt und auf einer geeigneten Mühle vermahlen wird.

Biologische Beispiele

Mycelwachstumstest mit Helminthosporium repentis-tritici

a) *Methode*

Der Pilzstamm wird wahrend 7 Tagen bei 18°C und 16 Std./Tag simulierter Sonnenlichtbestrahlung auf Potato-Dextrose-Agar (PDA) kultiviert, das einen oder beide Wirkstoffe enthält oder wirkstoffrei (Kontrolle) ist. Hierzu werden die Wirkstoffe I und II je in reinem Aethanol gelöst und den gewünschten Mengenverhältnissen entsprechend gemischt und verdünnt. Dann wird eine bestimmte Menge bei 50°C dem flüssigen PDA-Medium zugefügt und innig vermischt. Es werden Agar-Medien mit Wirkstoffkonzentrationen von 30; 10; 3; 1; 0,3; 0,1; 0,03 und 0,01 mg AS/Liter hergestellt. Die Aethanolkonzentration im Medium beträgt einheitlich 0,1 %.

Das flüssige Kulturmedium wird dann in Petrischalen gegossen (9 cm ∅) und im Zentrum mit einer Agarrondelle (5 mm ∅) beimpft, die aus einer 7 Tage alten Pilzkultur ausgestanzt wurde. Die beimpften Schalen werden während 5 Tagen bei 18°C in einer Klimakammer im Dunkeln inkubiert. Jeder Versuch läuft in 3 bzw. 4 Wiederholungen.

b) *Auswertung:*

Nach der Inkubationsperiode wird der Koloniedurchmesser bestimmt. Die Fungizidwirkungen nach Abbott werden in Probitwerte (C.I. Bliss,1935)* umgewandelt und gegen die Logarithmen der Fungizidkonzentrationen in eine

Dosis-Wirkungsbeziehung gesetzt. Mit Hilfe der probit-log Darstellung wird die Dosis/Wirkung-Kurve in eine Gerade umgewandelt (D.L. Finney 1971 "Probit analysis", 3rd ed., Cambridge, UK: Cambridge University Press. Die lineare Regression und die ED-50 Werte (effektive Dosierung) werden aus dieser Geraden bestimmt.

c) Berechung der Synergiefaktoren (SF) von Fungiziden in einer Mischung

Die theoretische Wirkung ($ED_{th}$) einer Mischung kann mit Hilfe der Formel von Wadley (**) berechnet werden, wenn die ED-Werte der Einzelkomponenten der Mischung bekannt sind:

* C.I. Bliss, Ann. Appl. Biol. 22, 134-167 (1935)

** Wadley, F.M. (1945)
The evidence required to show synergistic action of insecticides and a short cut in analysis. ET-223, U.S. Department of Agriculture, 8 pp.
Wadiey, F.M. (1967)
Experimental Statistics in Entomology.
Washington, U.S.A.: Graduae School Press, U.S.D.A.

$$\text{ED-50(th)} = \frac{a + b}{\dfrac{a}{\text{ED-50}_a} + \dfrac{b}{\text{ED-50}_b}}$$

a, b = Verhältnisse der Fungizide in der Mischung

Das Verhältnis aus theoretisch berechneter Wirkung ($ED_{th}$) und tatsächlich beobachteter Wirkung ($ED_{ob}$) der Mischung ergibt den Synergiefaktor (SF).

$$SF = \frac{\text{ED-50(th)}}{\text{ED-50(ob)}}$$

SF > 1,2 synergistische Interaktion
SF > 0,5 < 1,2 additive Interaktion
SF < 0,5 antagonistische Interaktion

Nach V. Gisi et al. (1987) und Y. Levy et al. (1986), zeigen SF-Werte grösser als 1,0 schon eine synergistische Interaktion an. (***)

Die Grenzen des Synergiefaktors einer bestimmten Mischung werden mit Hilfe der Standardabweichung der beobachteten ED-Werte bestimmt. SF-Werte grösser als 1,2 geben statistisch signifikanten Synergismus.

*** Gisi, U., Binder, H., Rimbach, E.(1985)
Synergistic interactions of fungicides with different modes of action.
Trans. Br. mycol. Soc. 85(2), 299-306
Levy, Y. et al. (1986)
The joint action of fungicides in mixture:
comparison of two methods of synergy calculation
Bulletin OEPP 16, 651-657 (1986)

d) *Resultate mit Wirkstoff I und Wirkstoff II*

Aktivitäten der Einzelkomponenten und des Gemischs (ED-50)

Tabelle 1

| Versuch Nr. / Wirkstoff | 1 | 2 | 3 |
|---|---|---|---|
| I | 2,7 | 3,5 | 2,2 |
| II | 2,3 | 1,7 | 0,9 |
| I:II = 1:1 | 1,6 | 1,5 | 0,6 |
| SF der ED-50 Werte | 1,6 | 1,5 | 2,1 |

f) *Kommentar*

Die Werte der Tabelle 1 zeigen für jeden der drei unabhängig gelaufenen Versuche, dass die Fungizid-Wirkung eines Gemisches aus Wirkstoff I und Wirkstoff II eine signifikante Steigerung erfahren, d.h. es liegt eine synergistisch gesteigerte Wirkung vor. Wie ersichtlich, sind diese Wirkungen jederzeit reproduzierbar.

Aehnliche Ergebnisse werden gegen Alternaria brassicae, Helminthosporium oryzae, Rhizoctonia solani und Fusarium culmorum erzielt.

**Patentansprüche**

1. Fungizides Mittel auf der Basis von mindestens zwei Wirkstoff-Komponenten, dadurch gekennzeichnet, dass die eine Wirkstoff-Komponente 4-(4-Chlorphenyl)-2-phenyl-2-[(1H-1,2,4-triazol-1-yl)methyl] butannitril der Formel I

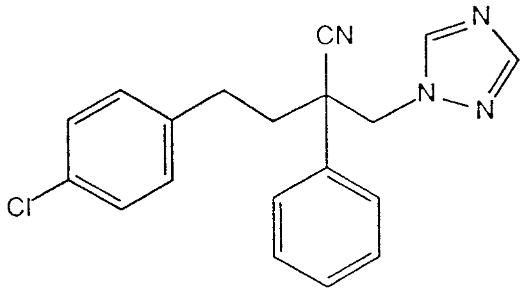

I

bzw. eines ihrer Säureadditionssalze oder Metallkomplexe ist, und dass
b) die andere Wirkstoff-Komponente
Fenpropimorph = cis-4-[3-(4-tert.Butylphenyl)-2-methylpropyl]-2,6-dimethylmorpholin der Formel II

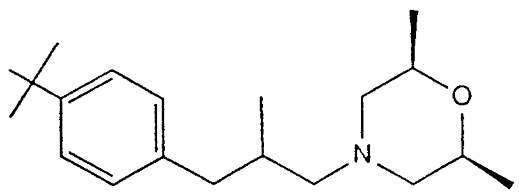

II

bzw. dessen Säureadditionssalz ist, zusammen mit einem geeigneten Trägermaterial.

2. Mittel nach Anspruch 1, dadurch gekennzeichnet, dass das Gewichtsverhältnis der Wirkstoff-Komponenten a):b) = 5:1 bis 1:20 beträgt.

3. Mittel nach Anspruch 1, dadurch gekennzeichnet, dass das Gewichtsverhältnis der Wirkstoff-Komponenten a):b) = 2:1 bis 1:10 beträgt.

4. Mittel nach Anspruch 1, dadurch gekennzeichnet, dass das Gewichtsverhältnis der Wirkstoff-Komponenten a):b) = 1:1 bis 1:4 beträgt.

5. Verwendung einer Wirkstoffkombination gemäss Anspruch 1 zur Bekämpfung von Pilzen oder zur Verhütung von Pilzbefall.

6. Verfahren zur Bekämpfung von Pilzen, dadurch gekennzeichnet, dass man in beliebiger Reihenfolge oder gleichzeitig eine durch Pilze befallene oder gefährdete Stelle mit a) dem Wirkstoff der Formel I, 4-(4-Chlorphenyl)-2-phenyl-2-[(1H-1,2,4-triazol-1-yl)methyl] butannitril, oder einem seiner Säureadditionssalze oder Metallkomplexe und mit b) dem Wirkstoff Fenpropimorph der Formel II bzw. dessen Säureadditionssalz behandelt.

7. Verfahren gemäss Anspruch 9, dadurch gekennzeichnet, dass Pflanzenvermehrungsgut behandelt wird.

**Claims**

1. A fungicidal composition based on at least two active ingredients wherein

   a) one active ingredient is 4-(4-chlorophenyl)-2-phenyl-2-[(1H-1,2,4-triazol-1-yl)methyl]butane nitrile of the formula I

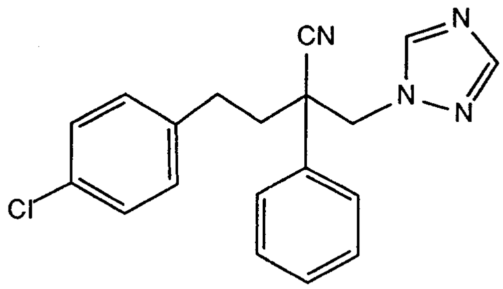

I

or an acid addition salt or metal complex thereof and

b) the other active ingredient is fenpropimorph = cis-4-[3-(4-tert-butylphenyl)-2-methylpropyl]-2,6-dimethylmorpholine of the formula II

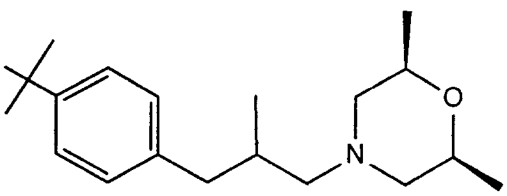

II

or an acid addition salt thereof, together with a suitable carrier material.

2. A composition according to claim 1, wherein the weight ratio of the active ingredients a):b) is 5:1 to 1:20.

3. A composition according to claim 1, wherein the weight ratio of the active ingredients a):b)is 2:1 to 1:10.

4. A composition according to claim 1, wherein the weight ratio of the active ingredients a):b) is 1:1 to 1:4.

5. Use of an active substance combination according to claim 1 for controlling fungi or for preventing fungal infection.

6. A process for controlling fungi, which comprises treating a location infected or liable to be infected with fungi in any desired order or simultaneously with a) the active substance of the formula I, 4-(4-chlorophenyl)-2-phenyl-2-[(1H-1,2,4-triazol-1-yl)methyl]butane nitrile, or an acid addition salt or metal complex thereof and with b) the active substance fenpropimorph of the formula II or an acid addition salt thereof.

7. A process according to claim 6, wherein plant propagation material is treated.

## Revendications

1. Composition fongicide à base d'au moins deux composants substances actives, caractérisé en ce que

a) l'un des composants substances actives est le 4-(4-chlorophényl)-2-phényl-2-[(1H-1,2,4-triazol-1-yl)méthyl]-butanenitrile de formule I

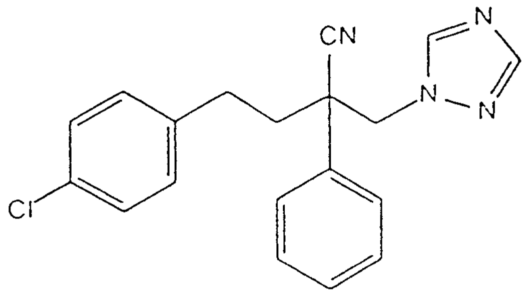

I

ou l'un de ses sels d'addition avec des acides ou de ses complexes métalliques et en ce que
b) l'autre composant substance active est le fenpropimorph = cis-4-[3-(4-tert-butylphényl)-2-méthylpropyl]-2,6-diméthylmorpholine de formule II

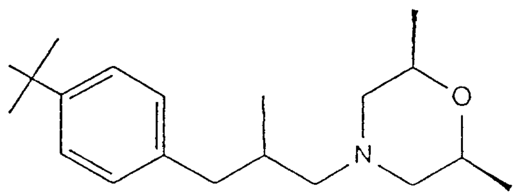

II

ou l'un de ses sels d'addition avec des acides, associés à un support approprié.

2. Composition selon la revendication 1, caractérisée en ce que le rapport pondéral des composants substances actives a):b) est compris entre 5:1 et 1:20.

3. Composition selon la revendication 1, caractérisée en ce que le rapport pondéral des composants substances actives a):b) est compris entre 2:1 et 1:10.

4. Composition selon la revendication 1, caractérisée en ce que le rapport pondéral des composants substances actives a):b) est compris entre 1:1 et 1:4.

5. Utilisation d'une combinaison des substances actives selon la revendication 1 pour lutter contre les champignons ou pour prévenir l'attaque par les champignons.

6. Procédé pour lutter contre les champignons, caractérisé en ce que l'on traite dans un ordre quelconque ou simultanément un endroit attaqué ou menacé par les champignons avec a) la substance active de formule I, le 4-(4-chlorophényl)-2-phényl-2-[(1H-1,2,4-triazol-1-yl)méthyl]butanenitrile ou avec l'un de ses sels d'addition avec des acides ou de ses complexes métalliques et avec b) la substance active de formule II, le fenpropimorph, ou avec l'un de ses sels d'addition avec des acides.

7. Procédé selon la revendication 6, caractérisé en ce que l'on traite les produits de reproduction des plantes.